(19) Europäisches Patentamt / European Patent Office / Office européen des brevets

(11) **EP 4 397 506 B1**

(12) **EUROPEAN PATENT SPECIFICATION**

(45) Date of publication and mention
of the grant of the patent:
**27.08.2025 Bulletin 2025/35**

(21) Application number: **23219618.8**

(22) Date of filing: **22.12.2023**

(51) International Patent Classification (IPC):
***B60C 1/00*** *(2006.01)*   ***C08L 9/06*** *(2006.01)*
***C08L 15/00*** *(2006.01)*

(52) Cooperative Patent Classification (CPC):
(C-Sets available)
**C08L 9/06; B60C 1/0016; C08L 15/00;** Y02T 10/86
(Cont.)

(54) **TIRE TREAD RUBBER COMPOSITION AND TIRE USING THE SAME**

REIFENLAUFFLÄCHENKAUTSCHUKZUSAMMENSETZUNG UND REIFEN DAMIT

COMPOSITION DE CAOUTCHOUC POUR BANDE DE ROULEMENT DE PNEU ET PNEU L'UTILISANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.01.2023 JP 2023000590**

(43) Date of publication of application:
**10.07.2024 Bulletin 2024/28**

(73) Proprietor: **TOYO TIRE CORPORATION
Itami-shi,
Hyogo 6640847 (JP)**

(72) Inventor: **KUBO, Haruka
Itami-shi 6640847 (JP)**

(74) Representative: **von Hirschhausen, Helge
Grosse - Schumacher -
Knauer - von Hirschhausen
Patent- und Rechtsanwälte
Nymphenburger Straße 14
80335 München (DE)**

(56) References cited:
**EP-B1- 2 424 740     EP-B1- 3 260 305
US-A1- 2005 267 247**

(52) Cooperative Patent Classification (CPC): (Cont.)

C-Sets
**C08L 9/06, C08L 15/00, C08L 7/00, C08L 9/00,
C08K 3/04, C08K 3/36, C08K 3/06;
C08L 15/00, C08L 7/00, C08L 9/06, C08K 3/04,
C08K 3/36, C08K 3/06**

**Description**

TECHNICAL FIELD

The present disclosure relates to a tire tread rubber composition and a tire using the same.

BACKGROUND

Conventionally, various studies have been conducted regarding techniques for improving fuel efficiency of tires (for example, see Patent Literature 1). Tire fuel efficiency can be evaluated based on rolling resistance, and it has been known that a tire with lower rolling resistance has better fuel efficiency. Patent Literature 1 discloses a tire in which a reduction in rolling resistance is achieved by devising modifications to formulation of a rubber composition constituting the tire tread.

SUMMARY

A tire tread rubber composition according to an aspect of the present disclosure includes a rubber component containing styrene-butadiene-based rubber and isoprene-based rubber, has a hardness Hs at 23 °C of 55 or greater and 62 or less, and is such that the hardness Hs at 23 °C and the loss tangent $\tan \delta$ at 35 °C satisfy $0.240 \leq \tan \delta / Hs \times 100 \leq 0.320$.

According to a tire tread rubber composition according to the present disclosure, it is possible to improve steering stability at the time of turning while ensuring good tire fuel efficiency.

DESCRIPTION OF EMBODIMENTS

As mentioned above, improvement in steering stability at the time of turning while ensuring good fuel efficiency is an important issue. Conventionally, tires with reduced rolling resistance have been proposed for achieving good fuel efficiency. However, particularly in vehicles having a relatively high vehicle height, by just reducing rolling resistance, steering stability becomes decreased, and toppling may possibly occur at the time of turning. The present inventors have conducted intensive studies for improving steering stability at the time of turning while ensuring good fuel efficiency, and have found as a result that this object can be achieved by setting the hardness Hs and the loss tangent $\tan \delta$ to within limited ranges. More specifically, in cases where the hardness Hs at 23 °C is 55 or greater and 62 or less, and the hardness Hs at 23 °C and the loss tangent $\tan \delta$ at 35 °C satisfy $0.240 \leq \tan \delta / Hs \times 100 \leq 0.320$, it is possible to improve steering stability at the time of turning while ensuring good fuel efficiency.

A tire tread rubber composition (hereinafter simply referred to as "rubber composition") according to the present disclosure contains styrene-butadiene-based rubber and isoprene-based rubber, has a hardness Hs at 23 °C of 55 or greater and 62 or less, and is such that the hardness Hs and the loss tangent $\tan \delta$ at 35 °C satisfy $0.240 \leq \tan \delta / Hs \times 100 \leq 0.320$.

The hardness Hs at 23 °C of the rubber composition is 55 or greater and 62 or less. When the hardness Hs is less than 55, grip force increases, and the vehicle tends to lift at the time of turning, resulting in decreased steering stability. Further, when the hardness Hs is greater than 62, grip force decreases, and the vehicle tends to slip at the time of normal travel, resulting in decreased steering stability. In the present disclosure, the hardness Hs at 23 °C is a value obtained by measuring the rubber composition after vulcanization by a method conforming to JIS K6253 as described in the Examples section below.

The lower limit of the hardness Hs at 23 °C of the rubber composition may be 55, but is preferably 56, and more preferably 57. In such cases, improvement in steering stability at the time of turning becomes more noticeable. The upper limit of the hardness Hs at 23 °C of the rubber composition may be 62, but is preferably 61, and more preferably 60. In such cases, improvement in steering stability at the time of normal travel becomes more noticeable.

The ratio of the loss tangent $\tan \delta$ at 35 °C relative to the hardness Hs at 23 °C (i.e., $\tan \delta / Hs \times 100$) in the rubber composition satisfies the condition of being 0.240 or higher and 0.320 or lower. When this condition is satisfied, it is possible to obtain a tire in which steering stability is improved while good fuel efficiency is ensured. The ratio ($\tan \delta / Hs \times 100$) is preferably 0.245 or higher, and more preferably 0.250 or higher. In such cases, improvement in steering stability becomes more noticeable. Further, the ratio ($\tan \delta / Hs \times 100$) is preferably 0.315 or lower, and more preferably 0.310 or lower. In such cases, a tire with better fuel efficiency can be obtained.

While the loss tangent $\tan \delta$ at 35 °C of the rubber composition is sufficient when $0.240 \leq \tan \delta / Hs \times 100 \leq 0.320$ is satisfied, from the perspective of achieving better fuel efficiency, the loss tangent $\tan \delta$ is preferably 0.190 or less, and more preferably 0.180 or less. Further, from the perspective of improving steering stability, the loss tangent $\tan \delta$ is preferably 0.140 or greater. Accordingly, an example of a suitable range for the loss tangent $\tan \delta$ is 0.140 or greater and 0.190 or less.

In the present disclosure, the loss tangent tan $\delta$ at 35 °C is a value obtained by measuring the rubber composition after vulcanization under the conditions of a temperature of 35 °C, an initial strain of 10 %, a dynamic strain of 1 %, and a frequency of 10 Hz, as described in the Examples section below.

From the perspective of improving steering stability at the time of turning, the 300% modulus of the rubber composition is preferably 8.0 MPa or higher, and more preferably 9.0 MPa or higher. Further, from the perspective of improving steering stability at the time of normal travel, the 300% modulus of the rubber composition is preferably 12.0 MPa or lower. Accordingly, an example of a suitable range for the 300% modulus is 8.0 MPa or higher and 12.0 MPa or lower, and in cases where high importance is placed on steering stability, an example suitable range is 9.0 MPa or higher and 12.0 MPa or lower. In the present disclosure, the 300% modulus is a value obtained by measuring the rubber composition after vulcanization by a method conforming to JIS K6251 as described in the Examples section below.

The rubber composition includes a rubber component containing styrene-butadiene-based rubber and isoprene-based rubber. By including these two types of rubber, it is possible to obtain a rubber composition having improved workability and also exhibiting the advantageous effects of the present disclosure.

No particular limitation is imposed on the styrene-butadiene-based rubber (SBR) so long as it is a rubber having styrene units and butadiene units, and examples thereof include emulsion-polymerized styrene-butadiene rubber (E-SBR) and solution-polymerized styrene-butadiene rubber (S-SBR). In the styrene-butadiene-based rubber, the total content of styrene units and butadiene units in 100 parts by mass of the rubber is, for example, 95 parts by mass or more, and may be 98 parts by mass or more, or 100 parts by mass. Although a single type among the above-noted styrene-butadiene-based rubbers may be used alone, two or more types thereof are preferably used in combination.

The styrene-butadiene-based rubber may be either unmodified SBR or modified SBR, but preferably includes modified SBR. The modified SBR may be SBR having a functional group that interacts with a silanol group at the surface of silica, and examples thereof include: end-modified SBR in which at least one end of the SBR is modified with a compound (or modifier) having the above-described functional group; main chain-modified SBR having the above-described functional group in the main chain; main chain/end-modified SBR having the above-described functional group in the main chain and at an end; and end-modified SBR into which a hydroxyl group or an epoxy group has been introduced by being modified with a multi-functional compound having two or more epoxy groups in the molecule.

The above-described functional group may be, for example, at least one selected from the group consisting of hydroxyl group, amino group, carboxyl group, alkoxyl group, alkoxysilyl group, thiol group, and halogen group.

As the styrene-butadiene-based rubber, it is possible to use, for example, SBR manufactured and sold by Sumitomo Chemical Co., Ltd., ENEOS Materials Corporation, Asahi Kasei Corporation, Zeon Corporation, or the like.

In the above-described rubber composition, the content of the styrene-butadiene-based rubber in 100 parts by mass of the rubber component is preferably 30 parts by mass or more, more preferably 40 parts by mass or more, and further preferably 50 parts by mass or more. By setting the content of the styrene-butadiene-based rubber to 30 parts by mass or more, favorable fuel efficiency tends to be achieved. Further, the content of the styrene-butadiene-based rubber is preferably 80 parts by mass or less. While there is concern that workability may deteriorate when a large amount of styrene-butadiene-based rubber is used, by setting the content of the styrene-butadiene-based rubber to 80 parts by mass or less, deterioration in workability can be suppressed. Accordingly, an example of a suitable range for the content of the styrene-butadiene-based rubber is 30 parts by mass or more and 80 parts by mass or less.

From the perspective of favorably achieving the advantageous effects of the present disclosure, the glass transition temperature (Tg) of the styrene-butadiene-based rubber is preferably -80 °C or higher and -20 °C or lower. The glass transition temperature of the styrene-butadiene-based rubber is measured conforming to JIS K7121 by differential scanning calorimetry (DSC) at a heating rate of 20 °C/min (measured temperature range: -150 °C to 50 °C).

No particular limitation is imposed on the isoprene-based rubber so long as it is a polymer comprising isoprene units as the main units, and examples thereof include isoprene rubber (IR), epoxidized isoprene rubber, hydrogenated isoprene rubber, grafted isoprene rubber, natural rubber (NR), deproteinized natural rubber (DPNR), ultra pure natural rubber (UPNR), epoxidized natural rubber (ENR), hydrogenated natural rubber (HNR), and grafted natural rubber. A single type among these may be used alone, or two or more types may be used in combination.

In the above-described rubber composition, the content of the isoprene-based rubber in 100 parts by mass of the rubber component is preferably 5 parts by mass or more, more preferably 10 parts by mass or more, and further preferably 15 parts by mass or more.

The rubber component may contain rubber constituents other than the styrene-butadiene-based rubber and the isoprene-based rubber. Examples of such other rubber constituents include diene-based rubbers such as butadiene-based rubber (BR), ethylene propylene diene rubber (EPDM), chloroprene rubber (CR), acrylonitrile butadiene rubber (NBR), and butyl rubber (IIR). A single type among these rubber constituents may be used alone, or two or more types may be used in combination.

No particular limitation is imposed on the butadiene-based rubber (BR) so long as it is a polymer comprising butadiene-based units as the main units, and it is possible to use, for example, BR with high cis content, BR with low cis content, and the like. A single type among these may be used alone, or two or more types may be used in combination.

In the present embodiment, carbon black and silica are used as reinforcing fillers.

As the carbon black, it is possible to use various known types, with no particular limitation. For example, as the carbon black, it is preferable to use carbon black having a specific surface area of nitrogen adsorption ($N_2SA$) (JIS K6217-2) of 70 to 150 $m^2$/g. Specific examples thereof include carbon black of SAF grade (N100 series), ISAF grade (N200 series), and HAF grade (N300 series). A single type among carbon black of these grades may be used alone, or two or more types may be used in combination.

The compounded amount of the carbon black is preferably less than 5 parts by mass relative to 100 parts by mass of the rubber component. By setting the compounded amount of the carbon black to less than 5 parts by mass, a tire hardness Hs of 55 or greater and 62 or less can be easily achieved, which improves steering stability. Further, the lower limit of the compounded amount of the carbon black is, for example, more than 2 parts by mass. Accordingly, an example of a suitable range for the compounded amount of the carbon black is more than 2 parts by mass and less than 5 parts by mass.

As the silica, it is possible to use, for example, wet silica such as wet precipitated silica and wet gelled silica, with no particular limitation. The BET specific surface area (as measured conforming to the BET technique described in JIS K6430) of the silica is not particularly limited, and may be, for example, 90 to 250 $m^2$/g, or may alternatively be 150 to 220 $m^2$/g.

The compounded amount of the silica is preferably more than 60 parts by mass, and more preferably 70 parts by mass or more, relative to 100 parts by mass of the rubber component. By setting the compounded amount of the silica to more than 60 parts by mass, steering stability at the time of turning is improved. Further, the compounded amount of the silica is preferably less than 90 parts by mass, and more preferably 85 parts by mass or less. By setting the compounded amount of the silica to less than 90 parts by mass, steering stability at the time of normal travel is improved. Accordingly, an example of a suitable range for the compounded amount of the silica is more than 60 parts by mass and less than 90 parts by mass.

To the rubber composition of the present embodiment, it is possible to add, apart from the above-described constituents, various additives commonly used in tire tread rubber compositions, such as a silane coupling agent, stearic acid, zinc oxide, wax, antioxidant, oil, vulcanization accelerator, and vulcanizing agent.

As the silane coupling agent, known silane coupling agents such as sulfide silane, mercapto silane, and the like can be used. While no particular limitation is imposed on the compounded amount of the silane coupling agent, the compounded amount of the silane coupling agent relative to the compounded amount of the silica is preferably 2 parts by mass or more and 20 parts by mass or less, and more preferably 5 parts by mass or more and 15 parts by mass or less.

As the oil, various oils commonly add to rubber compositions can be used. For example, it is possible to use mineral oils, i.e., at least one mineral oil selected from the group consisting of paraffin oil, naphthenic oil, and aromatic oil. The content of the oil is not particularly limited, and may be, for example, 40 parts by mass or less, or alternatively 30 parts by mass or less, relative to 100 parts by mass of the rubber component.

As the vulcanizing agent, sulfur is preferably used. The compounded amount of the vulcanizing agent is not particularly limited, and may be, for example, 0.1 part by mass or more and 5 parts by mass or less, or alternatively 0.5 parts by mass or more and 3 parts by mass or less, relative to 100 parts by mass of the rubber component.

Examples of the vulcanization accelerator include various vulcanization accelerators such as those based on sulfenamide, thiuram, thiazole, and guanidine. A single type among these vulcanization accelerators may be used alone, or two or more types may be used in combination. The compounded amount of the vulcanization accelerator is not particularly limited, and may be, for example, 0.1 part by mass or more and 5 parts by mass or less, or alternatively 0.5 parts by mass or more and 3 parts by mass or less, relative to 100 parts by mass of the rubber component.

The rubber composition according to the present embodiment can be produced by kneading according to a conventional method using a mixer such as a Banbury mixer, kneader, or roll mill that are commonly used. That is, for example, in a first mixing step (or non-processing kneading step), together with the carbon black and the silica, additives other than the vulcanizing agent and the vulcanization accelerator are added and mixed into the rubber component, and subsequently, in a final mixing step (or processing kneading step), the vulcanizing agent and the vulcanization accelerator are added and mixed into the obtained mixture, as a result of which an unvulcanized rubber composition can be prepared.

The rubber composition thus obtained is used for tread rubber that constitutes a ground contact surface of a pneumatic tire. The pneumatic tire may be a passenger vehicle tire, or may be a heavy load tire for trucks, buses, and the like. **In** an example embodiment, the rubber composition may be used for a tread of a summer tire. As used herein, "summer tire" signifies tires commonly used for vehicles, and denotes tires other than winter tires such as studless tires and snow tires, which are tires specialized for winter.

No particular limitation is imposed on the method for manufacturing the pneumatic tire. For example, the pneumatic tire may can be manufactured by: shaping the above-described rubber composition into a predetermined shape by extrusion according to a conventional method to thereby produce an unvulcanized tread rubber member; combining the tread rubber member with other members to produce an unvulcanized tire (or green tire); and then performing vulcanization molding of the unvulcanized tire at the temperature of, for example, 140 to 180 °C.

# EP 4 397 506 B1

EXAMPLES

While Examples will now be described below, the present disclosure is not limited to these Examples.

Using a Banbury mixer and according to the compounded amounts (in parts by mass) shown in Table 1 below, first, in the first mixing step, additives other than sulfur and the vulcanization accelerator were added and kneaded into the rubber component (delivery temperature = 160 °C), and subsequently, in the final mixing step, sulfur and the vulcanization accelerator were added and kneaded into the obtained kneaded product (delivery temperature = 90 °C), as a result of which a rubber composition was prepared. Details of the respective constituents listed in Table 1 were as follows.

- SBR1: "SBR0122" (unmodified ESBR having Tg = -40 °C) manufactured by ENEOS Materials Corporation
- SBR2: "HPR350" (modified solution-polymerized SBR having Tg = -33 °C) manufactured by ENEOS Materials Corporation
- SBR3: "HPR850" (modified solution-polymerized SBR having Tg = -25 °C) manufactured by ENEOS Materials Corporation
- SBR4: "Tuf1834" (solution-polymerized SBR having Tg = -70 °C) manufactured by Asahi Kasei Corporation
- BR: "BR150B" manufactured by Ube Industries, Ltd.
- NR: RSS#3
- Carbon black: "SEAST 3" manufactured by Tokai Carbon Co., Ltd.
- Silica: "Ultrasil VN 3" manufactured by Evonik Industries
- Silane coupling agent: "Si 69" manufactured by Evonik Industries
- Stearic acid: "LUNAC S-20" manufactured by Kao Corporation
- Zinc oxide: "Zinc Flower No. 3" manufactured by Mitsui Mining & Smelting Co., Ltd.
- Wax: "OZOACE 0355" manufactured by Nippon Seiro Co., Ltd.
- Antioxidant 1: "NOCRAC 6C" manufactured by Ouchi Shinko Chemical Industrial Co., Ltd.
- Antioxidant 2: "ANTAGE RD" manufactured by Kawaguchi Chemical Industry Co., Ltd.
- Oil: aromatic oil "PROCESS NC140" manufactured by JX Nippon Oil & Energy Corporation
- Resin: C5/C9-based aliphatic/aromatic copolymer-based hydrocarbon resin "Petrotack 90" (glass transition temperature: 65 °C; softening point: 95 °C) manufactured by Tosoh Corporation
- Vulcanization accelerator 1: "NOCCELER D" manufactured by Ouchi Shinko Chemical Industrial Co., Ltd.
- Vulcanization accelerator 2: "SOXINOL CZ" manufactured by Sumitomo Chemical Co., Ltd.
- Sulfur: "Powder sulfur" manufactured by Tsurumi Chemical Industry Co., Ltd.

Using the obtained unvulcanized rubber compositions of Examples 1 to 4 and Comparative Examples 1 and 2 as tread rubber, test pneumatic tires (tire size: 225/65R17 102H) were produced by performing vulcanization molding according to a conventional method. The tread pattern of each of the tires included four main grooves extending in the tire circumferential direction and ribs partitioned by the main grooves. The ribs had formed therein a plurality of microgrooves extending in the tire circumferential direction or the tire axial direction. The obtained test pneumatic tires were evaluated based on the following properties.

<Hardness Hs>

Conforming to JIS K6253, the hardness Hs at a temperature of 23 °C of rubber test pieces was measured using a Type A durometer. As the rubber test pieces, pieces cut out from an interior portion of the rubber layer of the tread part of the respective test tires were used.

<300% Modulus>

From an interior portion of the rubber layer of the tread part of each test tire, a test piece having a JIS No. 3 dumbbell shape and a thickness of 1 mm was cut out and formed in a manner such that the tire circumferential direction corresponded to the pulling direction. Then, conforming to JIS K6251, a tensile test was performed at an ambient temperature of 23 °C and under the condition of a pulling rate of 3.3 mm/sec, and the modulus (MPa) at 300% elongation was thereby measured. The thickness direction of the sample corresponded to the tire radial direction.

<Loss Tangent tan $\delta$>

Using a viscoelasticity testing machine manufactured by Toyo Seiki Seisaku-sho, Ltd., the loss tangent tan $\delta$ was measured under the conditions of a temperature of 35 °C, an initial strain of 10 %, a dynamic strain of 1 %, and a frequency

6

of 10 Hz.

<Rolling Resistance>

Using a rolling resistance measuring drum tester, the rolling resistance of each tire was measured under the conditions of an inflation pressure of 230 kPa, a load of 450 kgf, a temperature of 23 °C, and 80 km/h, and was expressed as an index relative to the value for Comparative Example 1, which was assumed to be 100. A smaller index indicates better fuel efficiency.

<Steering Stability>

Each test tire having a tire size of 225/65R17 102H was mounted on a standard rim with an inflation pressure of 230 kPa. At a travel speed of 80 km/h and with a load applied to the tire at 70 % and at 100 % of the maximum load indicated by the load index, the maximum cornering force value (Cfmax) was measured using a flat-belt cornering tester while gradually increasing the steering angle, and an evaluation test regarding maximum cornering force values was thereby carried out. The results were expressed as indices relative to the results for Comparative Example 1, which were assumed to be 100. A smaller index indicates better steering stability at the time of turning.

[Table 1]

| | | Example 1 | Example 2 | Example 3 | Example 4 | Comparative Example 1 | Comparative Example 2 |
|---|---|---|---|---|---|---|---|
| Compounded amounts (parts by mass) | SBR1 | - | - | - | - | - | 28 |
| | SBR2 | 31 | 32 | - | - | - | 38 |
| | SBR3 | 31 | 32 | 65 | 65 | 68 | - |
| | SBR4 | - | - | 12 | 12 | 12 | 14 |
| | BR | 16 | 16 | - | - | - | - |
| | NR | 22 | 20 | 23 | 23 | 20 | 20 |
| | Carbon black | 3 | 4 | 4.6 | 4.6 | 7 | 4 |
| | Silica | 76 | 76 | 70 | 70 | 81 | 94 |
| | Silane coupling agent | 4.6 | 4.6 | 4.9 | 4.9 | 5.7 | 6.6 |
| | Stearic acid | 2 | 2 | 2 | 2 | 2 | 2 |
| | Zinc oxide | 2 | 2 | 2 | 2 | 2 | 2 |
| | Wax | 2 | 2 | 2 | 2 | 2 | 2 |
| | Antioxidant 1 | 2 | 2 | 2.3 | 2.3 | 2 | 2.3 |
| | Antioxidant 2 | 0.7 | 0.7 | 0.7 | 0.7 | 0.7 | 0.7 |
| | Oil | 13 | 13 | 16 | 16 | 16 | 36 |
| | Resin | 2 | 2 | - | 4 | 2 | 4 |
| | Vulcanization accelerator 1 | 1.8 | 1.8 | 1.8 | 1.8 | 1.8 | 2.3 |
| | Vulcanization accelerator 2 | 1.5 | 1.5 | 1.5 | 1.5 | 1.5 | 1.8 |
| | Sulfur | 1.6 | 1.6 | 1.6 | 1.6 | 1.6 | 1.8 |

(continued)

| | | Example 1 | Example 2 | Example 3 | Example 4 | Comparative Example 1 | Comparative Example 2 |
|---|---|---|---|---|---|---|---|
| Physical properties | Hardness Hs (23 °C) | 59 | 60 | 58 | 57 | 64 | 63 |
| | 300% modulus (23 °C) | 11.7 | 11.0 | 10.8 | 9.0 | 11.7 | 9.2 |
| | Loss tangent tan δ (35 °C) | 0.157 | 0.15 | 0.166 | 0.177 | 0.196 | 0.244 |
| | tan δ/Hs × 100 | 0.265 | 0.251 | 0.286 | 0.309 | 0.307 | 0.385 |
| Indices | Rolling resistance | 101 | 97 | 97 | 101 | 100 | 101 |
| | Cfmax (70% LI) | 96 | 96 | 97 | 95 | 100 | 99 |
| | Cfmax (100% LI) | 97 | 98 | 98 | 97 | 100 | 100 |

The results were shown in Table 1. In Example 1 and Example 4, compared with Comparison Example 1 and Comparison Example 2, the maximum cornering force values were reduced while equivalent rolling resistance was ensured. Further, in Example 2 and Example 3, compared with Comparison Example 1 and Comparison Example 2, rolling resistance and maximum cornering force values were reduced. Based on the above test results, it is confirmed that in cases where the hardness Hs is 55 or greater and 62 or less, and the hardness Hs at 23 °C and the loss tangent tan δ at 35 °C satisfy $0.240 \leq \tan \delta/Hs \times 100 \leq 0.320$, it is possible to improve steering stability at the time of turning while ensuring good fuel efficiency.

Although a tread pattern including four main grooves extending in the circumferential direction and ribs partitioned by the main grooves was used in the present Examples, the tread pattern is not limited thereto. The advantageous effects of the present disclosure can be similarly achieved using, for example, a tread pattern in which the number of the main grooves is more than four or less than four, or a tread pattern in which transverse grooves extending across the ribs are formed.

**Claims**

1. A tire tread rubber composition, including

    a rubber component containing styrene-butadiene-based rubber and isoprene-based rubber, wherein hardness Hs at 23 °C is 55 or greater and 62 or less, and
    the hardness Hs at 23 °C and loss tangent tan δ at 35 °C satisfy formula (1) below:

$$0.240 \leq \tan \delta/Hs \times 100 \leq 0.320 \qquad \ldots (1),$$

    wherein hardness Hs and loss tangent tan δ are measured according to the method defined in the description.

2. The tire tread rubber composition according to claim 1, further including

    carbon black, wherein
    content of the carbon black relative to 100 parts by mass of the rubber component is more than 2 parts by mass to less than 5 parts by mass.

3. The tire tread rubber composition according to claim 1 or 2, further including

    silica, wherein
    content of the silica relative to 100 parts by mass of the rubber component is more than 60 parts by mass to less than 90 parts by mass.

4. The tire tread rubber composition according to any one of claims 1 to 3, wherein
glass transition temperature (Tg) of the styrene-butadiene-based rubber is -80 °C or higher and -20 °C or lower,
wherein glass transition temperature Tg is measured according to the method defined in the description.

5. The tire tread rubber composition according to any one of claims 1 to 4, wherein
the styrene-butadiene-based rubber includes modified styrene-butadiene rubber that is modified with a functional
group that interacts with a silanol group at a surface of silica.

6. The tire tread rubber composition according to claim 5, wherein
the functional group is at least one selected from the group consisting of hydroxyl group, amino group, carboxyl group,
alkoxyl group, alkoxysilyl group, thiol group, and halogen group.

7. A tire comprising a tread composed of the tire tread rubber composition according to any one of claims 1 to 6.


**Patentansprüche**

1. Reifenlaufflächenkautschukzusammensetzung, beinhaltend

eine Kautschuk-Komponente, die Kautschuk auf Styrol-Butadien-Basis und Kautschuk auf Isopren-Basis enthält, wobei
die Härte Hs bei 23 °C 55 oder mehr und 62 oder weniger beträgt und
die Härte Hs bei 23 °C und der Verlusttangens tan $\delta$ bei 35 °C der nachstehenden Formel (1) entsprechen:

$$0{,}240 \leq \tan \delta / Hs \times 100 \leq 0{,}320 \qquad \ldots (1),$$

wobei die Härte Hs und der Verlusttangens tan $\delta$ nach dem in der Beschreibung beschriebenen Verfahren
gemessen werden.

2. Reifenlaufflächenkautschukzusammensetzung nach Anspruch 1, ferner beinhaltend

Ruß, wobei
ein Anteil des Rußes, bezogen auf 100 Teile pro Masse der Kautschuk-Komponente, mehr als 2 Teile pro Masse
bis weniger als 5 Teile pro Masse beträgt.

3. Reifenlaufflächenkautschukzusammensetzung nach Anspruch 1 oder 2, ferner beinhaltend

Kieselerde, wobei
ein Anteil der Kieselerde, bezogen auf 100 Teile pro Masse der Kautschuk-Komponente, mehr als 60 Teile pro
Masse bis weniger als 90 Teile pro Masse beträgt.

4. Reifenlaufflächenkautschukzusammensetzung nach einem der Ansprüche 1 bis 3, wobei

die Glasübergangstemperatur (Tg) des Kautschuks auf Styrol-Butadien-Basis -80 °C oder mehr und -20 °C oder
weniger ist,
wobei die Glasübergangstemperatur Tg nach dem in der Beschreibung beschriebenen Verfahren gemessen
wird.

5. Reifenlaufflächenkautschukzusammensetzung nach einem der Ansprüche 1 bis 4, wobei
der Kautschuk auf Styrol-Butadien-Basis einen modifizierten Styrol-Butadien-Kautschuk beinhaltet, der mit einer
funktionellen Gruppe modifiziert ist, die mit einer Silanolgruppe auf einer Fläche von Kieselerde wechselwirkt.

6. Reifenlaufflächenkautschukzusammensetzung nach Anspruch 5, wobei
die funktionelle Gruppe mindestens eine ist, ausgewählt aus der Gruppe bestehend aus Hydroxylgruppe, Aminogruppe, Carboxylgruppe, Alkoxylgruppe, Alkoxysilylgruppe, Thiolgruppe und Halogengruppe.

7. Reifen, der eine Lauffläche umfasst, die aus der Reifenlaufflächenkautschukzusammensetzung nach einem der
Ansprüche 1 bis 6 besteht.

**Revendications**

1.  Composition de caoutchouc pour bande de roulement de pneu, comprenant

    un composant caoutchouc comportant du caoutchouc à base de styrène-butadiène et du caoutchouc à base d'isoprène,
    la dureté Hs à 23 °C étant supérieure ou égale à 55 et inférieure ou égale à 62, et
    la dureté Hs à 23 °C et la tangente de perte tan δ à 35 °C satisfaisant la formule (1) ci-dessous :

    $$0.240 \leq \tan \delta/Hs \times 100 \leq 0.320 \qquad \ldots (1),$$

    la dureté Hs et la tangente de perte tan δ étant mesurées selon la méthode définie dans la description.

2.  Composition de caoutchouc pour bande de roulement de pneu selon la revendication 1, comprenant en outre

    du noir de carbone,
    la teneur en noir de carbone par rapport à 100 parties en masse du composant caoutchouc étant supérieure à 2 parties en masse et inférieure à 5 parties en masse.

3.  Composition de caoutchouc pour bande de roulement de pneu selon la revendication 1 ou 2, comprenant en outre

    silice,
    la teneur en silice par rapport à 100 parties en masse du composant caoutchouc étant supérieure à 60 parties en masse et inférieure à 90 parties en masse.

4.  Composition de caoutchouc pour bande de roulement de pneu selon l'une quelconque des revendications 1 à 3, dans laquelle

    la température de transition vitreuse (Tg) du caoutchouc à base de styrène-butadiène est supérieure ou égale à -80 °C et inférieure ou égale à -20 °C,
    la température de transition vitreuse Tg étant mesurée selon la méthode définie dans la description.

5.  Composition de caoutchouc pour bande de roulement de pneu selon l'une quelconque des revendications 1 à 4, dans laquelle
    le caoutchouc à base de styrène-butadiène comprend du caoutchouc de styrène-butadiène modifié qui est modifié par un groupe fonctionnel interagissant avec un groupe silanol sur une surface de la silice.

6.  Composition de caoutchouc pour bande de roulement de pneu selon la revendication 5, dans laquelle
    le groupe fonctionnel est au moins un choisi dans le groupe constitué d'un groupe hydroxyle, un groupe amino, un groupe carboxyle, un groupe alcoxyle, un groupe alcoxysilyle, un groupe thiol, et un groupe halogène.

7.  Pneu comprenant une bande de roulement composée d'une composition de caoutchouc pour bande de roulement de pneu selon l'une quelconque des revendications 1 à 6.